# EUROPÄISCHE PATENTSCHRIFT

(11) **EP 0 995 764 B1**
(45) Veröffentlichungstag und Bekanntmachung des Hinweises auf die Patenterteilung: **19.03.2003**
(21) Anmeldenummer: 99119970.4
(22) Anmeldetag: 12.10.1999
(51) Int. Cl.: C08F 291/00, C08F 265/04, G02F 1/1339, B41M 5/00, B29C 67/00

(54) **Herstellung monodisperser kugelförmiger Polymerisate**
Preparation of monodispers spherical polymer particles
Préparation de particules sphériques monodispersées de polymère

(30) Priorität: 23.10.1998 DE 19848897
(43) Veröffentlichungstag der Anmeldung: 26.04.2000
(73) Patentinhaber: AGFA-GEVAERT, 2640 Mortsel (BE)
(72) Erfinder: Harrison, David Bryan, Dr., 51373 Leverkusen (DE); Podszun, Wolfgang, Dr., 51061 Köln (DE); Louwet, Frank, Dr., 3590 Diepenbeek (BE)

(56) Entgegenhaltungen:
- EP-A- 0 821 017
- US-A- 4 130 523
- US-A- 4 226 752
- US-A- 4 996 265
- US-A- 5 219 943
- US-A- 5 817 206

## Beschreibung

Die Erfindung betrifft die Herstellung von monodispersen kugelförmigen Polymerisaten mit einem gewichtsgemittelten mittleren Teilchendurchmesser von 1 bis 50 µm durch ein Saatzulauf-Verfahren.

Kugelförmige Polymerisate mit einer mittleren Teilchengröße von 1 bis 50 µm werden vielfältig angewendet, z.B. als Abstandshalter für Filmmaterialien, als Träger für Katalysatoren, als Eichsubstanzen für Lichtstreuungsmessungen oder als Ausgangsmaterialien für Chromatographieharze und Ionenaustauscher. Für viele Anwendungen werden Polymerisate mit möglichst einheitlicher Teilchengröße gewünscht (im folgenden "monodispers" genannt).

Monodisperse, kugelförmige Polymerisate mit Teilchengrößen von 1 bis 10 µm lassen sich durch die sog. Dispersionspolymerisation erzeugen. Ein geeignetes Verfahren wird beispielsweise in EP 80 225, 610 522, US 4 861 818 und 4 614 708 beschrieben. Bei der Dispersionspolymerisation wird ein Lösungsmittel, in dem die verwendeten Monomere löslich, das gebildete Polymerisat aber unlöslich ist, eingesetzt. Es hat sich allerdings gezeigt, daß eine vorgegebene Teilchengröße durch Dispersionspolymerisation schlecht genau einstellbar ist und daß es schwierig ist, größere Teilchen (z.B. größer als 8 µm) überhaupt zu erzeugen. Ein weiteres Kennzeichen ist, daß die Teilchengrößenverteilung mit steigender Teilchengröße deutlich breiter wird, d.h. weniger monodispers wird.

Kugelförmige Polymerisate mit einer Teilchengröße von ca. 10 bis 1000 µm können durch Suspensionspolymerisation erhalten werden. Unter dem Begriff Suspensionspolymerisation wird ein Verfahren verstanden, bei dem ein Monomer oder Monomergemisch, das einen im (in den) Monomer(en) löslichen Initiator enthält, in einer mit dem (den) Monomer(en) im wesentlichen nicht mischbaren Phase, die ein Dispergiermittel enthält, in Form von Tröpfchen, gegebenenfalls im Gemisch mit kleinen, festen Partikeln, zerteilt und durch Temperaturerhöhung unter Rühren polymerisiert wird. Weitere Einzelheiten der Suspensionspolymerisation werden beispielsweise in der Publikation "Polymer Processes", herausgegeben von C.E.Schildknecht, publiziert 1956 durch Interscience Publishers, Inc. New York, im Kapitel "Polymerization in Suspension" auf den Seiten 69 bis 109 beschrieben. Ein Nachteil der Suspensionspolymerisation ist die breite Teilchengrößenverteilung der erzeugten Perlpolymerisate.

Es bestand daher der Bedarf an einem Verfahren zur Herstellung monodisperser kugelförmiger Polymerisate gezielter Teilchengößen von 1 bis 50 µm.

Gemäß DE 19 63 439 ist bekannt, daß ein Saatzulauf-Verfahren zu kugelförmigen Polymerisaten gezielter Teilchengröße führen kann. Unter dem Begriff des Saatzulauf-Verfahrens wird ein Verfahren verstanden, bei dem ein Polymerisat (sog. Saat) mit einem Monomer oder Monomergemisch (sog. Zulauf) gequollen und dieses polymerisiert wird. Die Durchführung kann statisch oder dynamisch sein. Bei der statischen Durchführung wird die gesamte Menge an Monomer oder Monomermischung auf einmal bei Raumtemperatur zur Saat gegeben. Nach dem Quellen der Saat wird durch Erhöhung der Temperatur polymerisiert. Bei der dynamischen Durchführung wird das Monomer oder die Monomermischung über einen bestimmten Zeitraum der Saat unter Polymerisationsbedingungen kontinuierlich zugesetzt.

Ein Nachteil des Saatzulauf-Verfahrens, insbesondere des statischen Verfahrens, ist das Auftreten einer neuen Teilchengeneration, die durch nicht eingequollenes Monomer verursacht wird. So entspricht die Teilchengrößenverteilung des erhaltenen Saatzulauf-Polymerisates nicht in allen Fällen der aus der Saat erreichbaren theoretischen Teilchengrößenverteilung, sondern ist im allgemeinen etwas breiter. Weil für viele Anwendungen ein monodisperses Polymerisat erforderlich ist, muß die neue Teilchengeneration durch zusätzliche Arbeitsschritte von dem gewünschten Saatzulauf-Polymerisat getrennt werden.

Um die Effizienz des Saatzulauf-Verfahrens zu erhöhen und daher das Auftreten einer neuen Teilchengeneration zu unterdrücken, kann das Monomer oder Monomergemisch gemäß EP 101943 der Saat unter polymerisierenden Bedingungen zugegeben werden - das sog. dynamische Saatzulauf-Verfahren. Unter dem Begriff Effizienz wird der Anteil des Monomers, der in die Saat hineinquillt und dort polymerisiert, bezogen auf die Gesamtmenge an zugesetztem Monomer verstanden. Aber mit üblichen Saat-Polymeren, wie sie aus EP 448 391 bekannt sind, ist die Effizienz begrenzt.

Das sog. statischen Saatzulauf-Verfahren gemäß DE 19 63 439, bei dem das Monomer vollständig der Saat zugegeben wird, bevor es durch Temperaturerhöhung polymerisiert wird, bietet ein robustes, reproduzierbares, breit anwendbares Saatzulauf-Verfahren an. Doch muß bei diesem Verfahren eine mikroverkapselte Saat eingesetzt werden.

Spezielle Varianten des allgemeinen statischen Saatzulauf-Verfahrens sind bekannt, um die Effizienz zu steigern. Gemäß US 4 459 378, US 4 336 173, EP 709 400 und EP 308 864 wird die Saat, die aus normalem hochmolekularem Polymer besteht, mittels spezieller organischer Verbindungen niedriger Molekulargewichte (sog. Quellungshilfsmittel) gequollen. Anschließend wird das Monomer der behandelten Saat zugegeben und polymerisiert. Die Behandlung der Saat mit dem Quellungshilfsmittel ist jedoch sehr aufwendig und erfordert viele Schritte. Eine weitere Nachteil dieses Verfahrens ist, daß die als Quellungshilfsmittel verwendeten organischen Verbindungen im fertigen Saatzulauf-Polymerisat eingeschlossen sind und sich negativ auf die mechanischen Eigenschaften der Saatzulauf-Polymerisate auswirken. Darüber hinaus sind die mit dem Quellungshilfsmittel behandelten Saaten meistens nicht mehr kugelförmig, was zu nicht kugelförmiger Saatzulauf-Polymerisate führt.

In einer weiteren Variante des statischen Saatzulauf-Verfahrens gemäß EP 190 886 wird der Monomerzulauf als eine Mikroemulsion der normalen, hochmolekularen kugelförmigen Saat zugegeben. Dabei ist jedoch die Teilchengröße der Monomertröpfchen in der Zulaufemulsion außerordentlich kritisch für den Erfolg des Verfahrens. Außerdem ist das Verfahren aufgrund der dafür notwendigen Mikroemulsion in größerem Maßstab nur begrenzt anwendbar.

Um ein technisch einfaches statisches Saatzulauf-Verfahren durchführen zu können und trotzdem eine erhöhte Effizienz zu erhalten, ist die Verwendung spezieller Saaten bekannt. Gemäß US 5 189 107, US 4 186 120 und US 4 952 651 werden Saaten eingesetzt, die aus Polymeren mit einem Molekulargewicht (Mw) unter 10 000 g.mol⁻¹ bestehen. Ein Nachtteil dieses Verfahrens liegt in der schlechten Verfügbarkeit der Saat. Nach dem Stand der Technik ist es nicht möglich, eine solche Saat mit hoher Monodispersität herzustellen. Daher führt die Verwendung solcher Saaten nicht zu monodispersen Saatzulauf-Polymerisaten.

Es wurde nun gefunden, daß sowohl das statische als auch das dynamische Saatzulauf-Verfahren mit erhöhter Effizienz sehr einfach durchzuführen ist und monodisperse, kugelförmige Polymerisate mit einer Teilchengrößenverteilung liefert, die ein exaktes, vergrößertes Abbild der eingesetzten monodispersen, kugelförmigen Saat darstellen, wenn die Saat aus einem Polymerisat mit einer Kammstruktur besteht.

Gegenstand der Erfindung ist ein Verfahren zur Herstellung von monodispersen kugelförmigen Polymerisaten mit einem gewichtsgemittelten mittleren Teilchendurchmesser von 1 bis 50 µm nach einem Saatzulauf-Verfahren, dadurch gekennzeichnet, daß man als Saat eine monodisperse, kugelförmige Saat einsetzt, die aus einem Polymer besteht, das eine Kammstruktur aufweist.

Unter dem Begriff eines Polymer mit einer Kammstruktur wird ein Polymerisat verstanden, das aus eine Hauptkette und eine Mehrzahl langer Seitenketten besteht Eine Kammstruktur im Sinne der Erfindung liegt z.B bei gepfropfte Polymerisaten sowie bei Polymerisaten mit langkettigen oder kurzkettigen Verzweigungen vor. Gut geeignete Polymerisate mit Kammstruktur sind auch Copolymerisate mit Comonomeren, die langkettige Reste enthalten. Bevorzugt sind Copolymerisate aus Methyl(meth)acrylat und C₂- bis C₂₂-Alkyl(meth)acrylaten. Besonders bevorzugt sind Copolymerisate aus Methyl(meth)acrylat und C₆-C₂₂-Alkyl(meth)acrylaten, die insbesondere eine Löslichkeit in Wasser von höchstens 0,03 Gew.-% bei 25°C (zur Definition siehe EP 615 158) haben. Mit der Bezeichnung (Meth)acrylat wird sowohl Acrylat als auch Methacrylat gemeint Besonders bevorzugt werden Copolymerisate aus
a) 99,5 bis 80 Gew.-%, insbesondere 99 bis 85 Gew.-% Methyl(meth)acrylat, bevorzugt 98 bis 90 Gew.-% Methyl(meth)acrylat.
b) 0,5 bis 20 Gew.-%, insbesondere 1 bis 15 Gew.-%, bevorzugt 2 bis 10 Gew.-% mindestens eines (Meth)acrylsäurealkylesters mit einem C₂- bis C₂₂-Alkylrest, bzw. C₆- bis C₂₂-Alkylrest.

(Meth)acrylsäurealkylester mit einem C₂- bis C₂₂-Alkylrest im Sinne der Erfindung sind die Ester der Acrylsäure und Methacrylsäure mit C₂- bis C₂₂-Alkoholen. Die Methacrylsäureester sind bevorzugt. Der Alkylrest kann durch Sauerstoffatome unterbrochen sein. Beispielhaft seien Ethylmethacrylat, n-Propylmethacrylat, iso-Propylmethacrylat, n-Butylmethacrylat, iso-Butylmethacrylat, n-Hexylmethacrylat, 2-Ethylhexylmethacrylat, n-Octylmethacrylat n-Decylmethacrylat, Methoxyethylmethacrylat, Methoxybutylmethacrylat, Triethylenglycolmonomethacrylat, n-Dodecylmethacrylat, Tridecylmethacrylat und Stearylmethacrylat genannt Bevorzugt sind Methacrylsäureesters mit einem geradkettigen C₁₀- bis C₂₂-Alkylrest, besonders bevorzugt mit einem C₁₂- bis C₁₈-Alkylrest, insbesondere n-Dodecylmethacrylat und Stearylmethacrylat.

Die kugelförmige Saat besitzt vorzugsweise eine mittleren Teilchengröße von 0,5 bis 15 µm, vorzugsweise 1 bis 12 µm, besonders bevorzugt 3 bis 10µm

Als Maß für die Breite der Teilchengrößenverteilung der kugelförmigen Polymerisate wird das Verhältnis aus dem 90%-Wert (∅ (90)) und dem 10%-Wert (∅ (10)) der Volumenverteilung gebildet. Monodisperse kugelförmige Saaten im Sinne der Erfindung haben Teilchengrößenverteilungen ∅ (90)/∅ (10) von weniger als 2,0, bevorzugt weniger als 1,5.

Die als Saat geeigneten Polymere können durch an sich bekannte Verfahren hergestellt werden. Ein gut geeignetes Verfahren ist die sogenannte Dispersionspolymerisation, die in EP 610 522 ausführlich beschrieben wird. Auch das in US 4 614 708 offenbarte Verfahren kann zur Herstellung erfindungsgemäß geeigneter Saatpolymerisate angewendet werden. Beispielsweise können Mischungen aus Methylmethacrylat und den oben genannten Comonomeren zur Reaktion gebracht werden.

Das erfindungsgemäße statische Saat-Zulauf-Verfahren umfaßt die folgenden Schritte:
a) Suspendieren der monodispersen kugelförmigen Saat, die aus einem Polymerisat mit einer Kammstruktur besteht, in einer wäßrigen kontinuierlichen Phase.
b) Zugabe einer Mischung aus einem oder mehreren Monomer(en) und einem Initiator, wobei diese Mischung in die Saat einquillt.
c) Polymerisation der geqollenen Saat zu Perlpolymerisaten bei erhöhter Temperatur.

Das erfindungsgemäße dynamische Saat-Zulauf-Verfahren umfaßt die folgenden Schritte:
a) Suspendieren der monodispersen kugelförmigen Saat, die aus einem Polymer mit Kammstruktur besteht, in einer wäßrigen, kontinuierlichen Phase.
b) Erwärmen der Suspension auf Polymerisationstemperatur.
c) Zugabe wenigstens eines wasserunlöslichen Monomers und eines Polymerisationsinitiators zu der genannten Suspension mit einer Zugabegeschwindigkeit des Monomers von höchstens 1/30 g bezogen auf 1 g des vorgelegten Polymers pro Minute.

Obwohl beide Verfahren gut geeignet sind, ist das dynamische Verfahren vorzuziehen, weil die erzielbare Effizienz größer ist. Dadurch werden größere Polymerkugeln mit guter Monodispersität in vergleichbarer oder kürzerer Zeit erhältlich als nach der statischen Methode.

Bei dem erfindungsgemäßen Saatzulauf-Verfahren wird die Saat in einer wäßrigen Phase suspendiert, wobei das Verhältnis von Saat und Wasser weitgehend unkritisch ist. Es kann beispielsweise zwischen 1 : 1 und 1 : 100, vorzugsweise zwischen 1 : 2 und 1 : 10 liegen. Das Suspendieren kann z.B. mit Hilfe eines normalen Gitter- oder Blattrührers erfolgen, wobei niedrige bis mittlere Scherkräfte angewendet werden.

Vorzugsweise wird das erfindungsgemäße Saatzulauf-Verfahren in Anwesenheit eines Tensids durchgeführt. Das Tensid kann ionisch oder nichtionisch sein. Ionische Tenside werden bevorzugt. Beispiele für nichtionische Tenside sind die ethoxylierten Nonylphenole. Als anionische Tenside sind Alkylsulfonate und besonders die Natriumsalze von Sulfobernsteinsäureestern geeignet. N-Alkylammoniumsalze, wie z.B. Methyltricaprylammoniumchlorid seien als kationische Tenside genannt. Salze von Sulfobernsteinsäureestern sind bevorzugt. Das Tensid wird in einer Menge von 0,05 bis 5 Gew.-%, vorzugsweise von 0,1 bis 2 Gew.-% bezogen auf die Wasserphase, eingesetzt.

Weiterhin können hydrophile polymere Stabilisatoren verwendet werden, z.B. Polyethylenoxid, niedermolekularer Polyvinylalkohol, Polyvinylpyrrolidon, Vinylalkohol-Vinylacetat-Copolymer mit 12 oder 40 Mol-% Vinylacetateinheiten, die Natrium- und Kaliumsalze von Styrol-Acrylsäure-Copolymerisaten mit 40 bis 60 Mol-% Acrylsäure, Vinylacetat-Crotonsäure-Copolymer, die Reaktionsprodukte von Styrol-Maleinsäureanhydrid-Copolymer, Vinylacetat-Maleinsäureanhydrid-Copolymer, Ethylen-Maleinsäureanhydrid-Copolymer, N-Vinylyrrolidon-Maleinsäureanhydrid-Copolymer mit Hydroxyalkyl- oder Aminoalkyl(meth)acrylaten, Mononatriumsalz des Styrol-Maleinsäure-Copolymers und besonders letzteres mit 60 Mol-% Styrol.

Beim statischen Verfahren erfolgt der Zulauf aus Monomer bzw. Monomergemisch und Initiator beispielsweise bei Raumtemperatur, in jedem Falle aber bei einer Temperatur bei der der angewendete Initiator nicht aktiv ist Die Geschwindigkeit der Zugabe des Zulaufs ist wenig kritisch. Normalerweise wird der Zulauf innerhalb von 5 bis 120 Minuten der suspendierten Saat zugegeben. Beim dynamischen Verfahren kann der Initiator von Anfang an im Reaktionsgefäß anwesend sein oder zusammen mit dem Monomer oder Monomergemisch unter Polymerisationsbedingungen zugegeben werden.

Die Monomeren im Sinne des erfindungsgemäßen Saatzulauf-Verfahrens sind C₁- bis C₂₂-Ester von Acryl- und Methacrylsäure sowie Silanmonomere gemäß EP-A-417 539, US 5 646 210 und US 5 716 771. Bevorzugt sind C₁- bis C₈-Alkylester, insbesondere C₁- bis C₄-Alkylester von Methacrylsäure. Beispielhaft seien genannt Ethylmethacrylat, n-Propylmethacrylat, iso-Propylmethacrylat, n-Butylmethacrylat, iso-Butylmethacrylat. Methylmethacrylat ist ganz besonders bevorzugt Die zugesetzte Mischung kann auch anteilig Vernetzer enthalten. Geeignete Vernetzer sind Ethylenglycoldimethacrylat, Trimethylolpropantriacrylat, Butandioldimethacrylat, Triethylenglycoldimethacrylat und Allylmethacrylat. Der Anteil an Vernetzer kann beispielsweise 0,1 bis 25 Gew.-%, vorzugsweise 0,5 bis 15 Gew.-% bezogen auf die Monomermischung, betragen.

Als Initiatoren sind Verbindungen geeignet, die bei Temperaturerhöhung freie Radikale bilden. Beispielhaft seien genannt: Peroxide wie Dibenzoylperoxid, Dilaurylperoxid, Bis-(p-chlorbenzoylperoxid), Dicyclohexylperoxydicarbonat, des weiteren Peroxyester wie tert.-Butylperoxyisobutyrat, tert.-Butylperoxypivalat, tert.-Butylperoxy-2-ethylhexanonat und 2,5-Bis(2-ethylhexanoylperoxy)-2,5-dimethylhexan. Weitere gut geeignete Initiatoren sind Azoverbindungen wie 2,2'-Azobis(isobutyronitril) und 2,2'-Azobis(2-methylisobutyronitril).

Die Initiatoren werden im allgemeinen in Mengen von 0,05 bis 6,0 Gew.-%, vorzugsweise 0,2 bis 4,0 Gew.-%, bezogen auf das Monomergemisch, angewendet.

Das Massen-Verhältnis von Saat zu Zulauf (Saat/Zulauf-Verhältnis) beträgt im allgemeinen 1 : 1 bis 1 : 20, vorzugsweise 1 : 2 bis 1 : 10.

Die Rührgeschwindigkeit bei der Polymerisation ist wenig kritisch und hat im Gegensatz zur herkömmlichen Suspensionspolymerisation keinen Einfluß auf die Teilchengröße. Es werden niedrige Rührgeschwindigkeiten angewendet, die ausreichen, die Teilchen der Suspension in Schwebe zu halten und die Abführung der Polymerisationswärme zu unterstützen.

Beim statischen Verfahren wird nach der Zugabe des Zulaufs die Mischung aus suspendierter Saat und Zulauf bei einer Temperatur, bei der der angewendete Initiator nicht aktiv ist, gerührt. Während dieser Zeit - sog. Quellzeit - quillt der Zulauf in die Saat hinein. Normalerweise wird eine Quellzeit zwischen 15 Minuten und 10 Stunden verwendet.

Die Polymerisationstemperatur richtet sich nach der Zerfallstemperatur des eingesetzten Initiators. Sie liegt im allgemeinen zwischen 50 bis 100°C, vorzugsweise zwischen 75 und 85°C. Die Polymerisation dauert 0,5 bis einige Stunden. Nach der Polymerisation kann das Saatzulauf-Polymerisat aus dem Reaktionsgemisch durch Filtration oder besonders vorteilhaft durch Sedimentation mit Hilfe einer Zentrifuge oder eines Dekanters isoliert und gegebenenfalls nach ein oder mehreren Wäschen getrocknet werden.

Die erfindungsgemäßen Saatzulauf-Polymerisate besitzen mindestens einen um 20 % größeren Durchmesser als die zu ihrer Herstellung eingesetzten Saatpolymere.

Die nach dem erfindungsgemäßen Verfahren erhaltenen Polymerisate können z. B. als Abstandshalter für Filmmaterialien, als Träger für Katalysatoren oder als Ausgangsmaterialien für Chromatographieharze und Ionenaustauscher eingesetzt werden. Darüber hinaus eignen sie sich in hervorragender Weise zur Herstellung von 3D-Modellen durch Lasersintern (sog. "Rapid-Prototyping).

Unter dem Begriff Rapid-Prototyping werden die heute bekannten computergesteuerten additiven, automatischen Modellbauverfahren zusammengefaßt. Das Lasersintern bezeichnet ein Rapid-Prototyping-Verfahren, bei dem Schüttungen aus bestimmten pulverigen Werkstoffen unter Einwirkung von vorzugsweise durch ein Programm gesteuerten Laserstrahlen an bestimmten Raumstellen aufgeheizt und versintert werden.

Die erfindungsgemäßen kugelförmigen Polymerisate eignen sich weiterhin als Abstandshalter für LCD-Schirme und Bildempfangsmaterialien für anschlagfreie Druckverfahren. Erfindungsgemäße kugelförmige Polymerisate, die Anteile von Silanmonomeren gemäß US 5 646 210 und EP 417 539 enthalten, sind besonders als Abstandshalter für LCD-Schirme bevorzugt.

### Beispiele

### Herstellung von Saaten ohne Kammstruktur

### Saat O-1

In einem 4 l-Reaktor, ausgerüstet mit einem Gitterrührer, wurden 2 400 g Methanol, 300 g Methylmethacrylat und 180 g Polyvinylpyrrolidon K30 zu einer homogenen Lösung gemischt. Unter Stickstoff bei einer Rührgeschwindigkeit von 100 U/min wurde innerhalb einer Stunde diese Lösung auf 55°C gebracht und eine Lösung von 3 g 2,2'-Azobis(isobutyronitril) in 117 g Methanol dem Reaktor zugefügt. Die Polymerisationsmischung wurde weitere 20 Stunden bei 55°C und 100 U/min gerührt. Anschließend wurde die fertige Polymerdispersion auf Raumtemperatur abgekühlt. Das erhaltene Saat-Polymerisat wurde durch Sedimentation und Dekantieren im mit Methanol feuchten Zustand isoliert.

Das feuchte Saat-Polymerisat wurde zweimal jeweils mit 2 Liter Methanol und zweimal jeweils mit 2 Liter Wasser gewaschen, um ein mit Wasser feuchtes Saat-Polymerisat zu erhalten. Anschließend wurde eine wäßrige Dispersion mit 20,0 Gew.-% Saat-Polymerisat hergestellt. Die Teilchengröße des erhaltenen Saat-Polymerisats und seine Monodispersität sind in Tabelle 1 eingetragen.

### Saat O-2

In einem 4 l-Reaktor, ausgerüstet mit einem Gitterrührer, wurden 1835 g Methanol, 400g Wasser, 300 g Methylmethacrylat und 180 g Polyvinylpyrrolidon K30 zu einer homogenen Lösung gemischt. Unter Stickstoff bei einer Rührgeschwindigkeit von 100 U/min wurde innerhalb einer Stunde diese Lösung auf 55°C gebracht und eine Lösung von 9 g 2,2'-Azobis(isobutyronitril) in 165 g Methanol dem Reaktor zugefügt. Die Polymerisationsmischung wurde weitere 20 Stunden bei 55°C und 100 U/min gerührt. Anschließend wurde die fertige Polymerdispersion auf Raumtemperatur abgekühlt. Das erhaltene Saat-Polymerisat wurde durch Sedimentation und Dekantieren im mit Methanol feuchten Zustand isoliert.

Das Saat-Polymerisat wurde wie im Falle der Saat O-1 aufgearbeitet. Die Teilchengröße des erhaltenen Saat-Polymerisats und seine Monodispersität sind in Tabelle 1 eingetragen.

### Saat O-3

In einem 4 l-Reaktor, ausgerüstet mit einem Gitterrührer, wurden 2 400 g Methanol, 300 g Methylmethacrylat und 180 g Polyvinylpyrrolidon K30 zu einer homogenen Lösung gemischt. Unter Stickstoff bei einer Rührgeschwindigkeit von 100 U/min wurde innerhalb einer Stunde diese Lösung auf 55°C gebracht und eine Lösung von 12 g 2,2'-Azobis(isobutyronitril) in 158 g Methanol dem Reaktor zugefügt. Die Polymerisationsmischung wurde weitere 20 Stunden bei 55°C und 100 U/min gerührt. Anschließend wurde die fertige Polymerdispersion auf Raumtemperatur abgekühlt. Das erhaltene Saat-Polymerisat wurde durch Sedimentation und Dekantieren im mit Methanol feuchten Zustand isoliert.

Das Saat-Polymerisat wurde wie im Falle der Saat O-1 aufgearbeitet. Die Teilchengröße des erhaltenen Saat-Polymerisats und seine Monodispersität sind in Tabelle 1 eingetragen.

### Saat O-4

In einem 4 l-Reaktor, ausgerüstet mit einem Gitterrührer, wurden 2 343 g Methanol, 300 g Methylmethacrylat und 180 g Polyvinylpyrrolidon K30 zu einer homogenen Lösung gemischt. Unter Stickstoff bei einer Rührgeschwindigkeit von 100 U/min wurde innerhalb einer Stunde diese Lösung auf 55°C gebracht und eine Lösung von 12 g 2,2'-Azobis(isobutyronitril) in 165 g Methanol dem Reaktor zugefügt Die Polymerisationsmischung wurde weitere 20 Stunden bei 55°C und 100 U/min gerührt. Anschließend wurde die fertige Polymerdispersion auf Raumtemperatur abgekühlt. Das erhaltene Saat-Polymerisat wurde durch Sedimentation und Dekantieren im mit Methanol feuchten Zustand isoliert.

Das Saat-Polymerisat wurde wie im Falle der Saat O-1 aufgearbeitet. Die Teilchengröße des erhaltenen Saat-Polymerisats und seine Monodispersität sind in Tabelle 1 eingetragen.

### Saat O-5

Die Polymerisation wurde wie bei Saat O-3 bei einer Ruhrgeschwindigkeit von 50 U/Min statt 100 U/Min durchgeführt. Das Saat-Polymerisat wurde wie im Falle der Saat O-1 aufgearbeitet. Die Teilchengröße des erhaltenen Saat-Polymerisats und seine Monodispersität sind in Tabelle 1 eingetragen.

### Saat O-6

Die Polymerisation wurde wie bei Saat O-4 mit 9 g statt 12 g 2,2'-Azobis(isobutyronitril) und mit Zusatz von 3 g des Enolethers der Formel I durchgeführt.

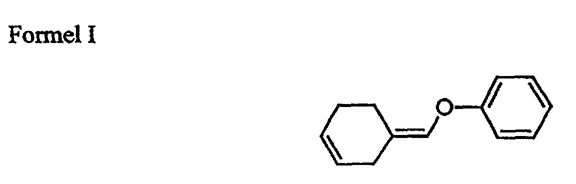

Das Saat-Polymerisat wurde wie im Falle der Saat O-1 aufgearbeitet. Die Teilchengröße des erhaltenen Saat-Polymerisats und seine Monodispersität sind in Tabelle 1 eingetragen.

**Tabelle 1:**

| **Hergestellte Saaten ohne Kammstruktur** | | |
|---|---|---|
| Saat | Teilchengöße [µm] | Monodispersistät [∅ (90)/∅ (10)] |
| O-1 | 4,11 | 1,19 |
| O-2 | 5,16 | 1,19 |
| O-3 | 6,39 | 1,28 |
| O-4 | 7,23 | 1,23 |
| O-5 | 8,19 | 1,16 |
| O-6 | 11,53 | 1,21 |

### Allgemeine Herstellung der Saaten K-1 bis K-12 mit Kammstruktur

In einem 4 l-Reaktor, ausgerüstet mit einem Gitterrührer, wurden 2 346 g Methanol, 300 g Monomergemisch (Tabelle 2) und 180 g Polyvinylpyrrolidon K30 zu einer homogenen Lösung gemischt. Unter Stickstoff bei einer Rührgeschwindigkeit von 100 U/min wurde innerhalb einer Stunde diese Lösung auf 55°C gebracht und eine Lösung von 9 g 2,2'-Azobis(isobutyronitril) in 165 g Methanol dem Reaktor zugefügt. Die Polymerisationsmischung wurde weitere 20 Stunden bei 55°C und 100 U/min gerührt. Anschließend wurde die fertige Polymerdispersion auf Raumtemperatur abgekühlt. Das erhaltene Saat-Polymerisat wurde durch Sedimentation und Dekantieren im mit Methanol feuchten Zustand isoliert

Das Saat-Polymerisat wurde wie im Falle der Saat O-1 aufgearbeitet Die Teilchengrößen der erhaltenen Saat-Polymerisate und ihrer Monodispersitäten sind in Tabelle 2 eingetragen.

### Herstellung der Saat K-13 mit Kammstruktur

### Herstellung der Lösung A:

541,75 g einer 10 gew.-%igen wäßrigen Lösung des Mononatriumsalzes des Styrol-Maleinsäure-Copolymerisates wurden in einen doppelwandigen 1l Zylinder, ausgerüstet mit einem Rückflußkühler, einem Rührer, einem Thermometer und einem Stickstoffeinlaß, der sich unter Flüssigkeitsniveau befindet, gegeben. Während der gesamten Reaktion wurde Stickstoff eingespeist, um die Atmosphäre im Reaktionsgefäß von Luft freizuhalten. Die Lösung wurde mit 100 U/Min. gerührt und auf 65°C erwärmt. Dann wurden 7,2 g K₂S₂O₈ hinzugefügt. Die Reaktionsmischung wurde 2 Stunden bei 65°C gehalten. Die Mischung wurde dann auf Raumtemperatur abgekühlt und später zum Starten der Polymerisation verwendet.

### Herstellung der Lösung B:

Die folgenden Substanzen wurden bei Raumtemperatur in einem doppelwandigen 20l Reaktionskessel, ausgerüstet mit einem Rückflußkühler, einem Rührer, einem Thermometer und einem Stickstoffeinlaß, der sich unter Flüssigkeitsniveau befindet, gegeben:

| | |
|---|---|
| 1823,12 g | entmineralisiertes Wasser |
| 10324,6 g | Methanol |
| 3217,87 g | Methylmethacrylat |
| 65,67 g | Stearylmethacrylat |
| 65,67 g | Nonylphenolpolyglykolether (Hostapal B) |
| 4 g | Zitronensäure. |

Die Reaktion wurde unter Stickstoff durchgeführt. Die Mischung wurde mit 55 U/Min. gerührt und auf 65°C erhitzt.

### Mischung der Lösungen A und B:

492,5 g der Lösung A wurden innerhalb von 3 Minuten zur Lösung B gegeben. Die Polymerisation wurde bei einer Temperatur zwischen 65°C und Rückflußtemperatur des Reaktionsmediums fortgesetzt. 1 Minute nach der Zugabe der Lösung A zur Lösung B wurde aus der zuvor klaren Lösung B eine milchig-weiße Dispersion. Nach der Polymerisation wird die Dispersion unter Rühren auf Raumtemperatur gekühlt. Anschließend wurde die Dispersion durch ein Nylontuch mit der Maschengröße 60 x 60 µm filtriert. Man erhielt 15,9 kg einer Dispersion aus Methylmethacrylat-Stearylmethacrylat-Copolymerkügelchen, stabilisiert mit einem Pfropfcopolymer aus Methylmethacrylat-Stearylmethacrylat-Copolymer und dem Natriumsalz des Styrol-Maleinsäure-Copolymer, die 21,19 g Polymerkügelchen pro 100 g Dispersion enthielt

### Herstellung der Saat K-14 mit Kammstruktur

Die Reaktion wurde in einem doppelwandigen 20l Glaszylinder, ausgerüstet mit einem Rückflußkühler, einem Rührer, einem Thermometer und einem Stickstoffeinlaß, der sich oberhalb Flüssigkeitsniveau befand, durchgeführt. In dieses Reaktionsgefäß wurden bei Raumtemperatur 258,76 g einer 20 gew.-%igen wäßrigen Lösung von Styrol-Maleinsäureanhydrid-Copolymer, eingestellt auf pH 7, 2156,44 g destilliertes Wasser und Zitronensäure zur Einstellung von pH 5 gegeben. Das Reaktionsgefäß wurde während der Reaktion mit Stickstoff gespült.

Die vorstehend beschriebene Mischung wurde mit 100 U/Min. gerührt, nach 5 Minuten Rühren auf 65°C erwärmt und nach 45 Minuten, als die Temperatur von 65°C erreicht war, mit 6,90 g Kaliumpersulfat versetzt. Die Reaktionsmischung wurde weitere 120 Minuten gerührt und bei 65°C gehalten.

Dann wurden 10075,74 g Methanol und anschließend eine vorbereitete Lösung aus 3381,00 g Methylmethacrylat, 69,0 g Stearylmethacrylat und 69,0 g Nonylphenolpolyglykolether auf einmal hinzugefügt. Die Mischung wurde bei 65°C gehalten und änderte sich nach etwa 35 Minuten von einer klaren Lösung in eine milchig-weiße Dispersion. Die Polymerisation wurde 18 Stunden bei 65°C fortgesetzt, anschließend wurde die Dispersion unter Rühren auf 30°C abgekühlt und durch ein Nylontuch mit der Maschengröße 75 x 75 µm filtriert. Man erhielt 15800 g einer Dispersion von Methylmethacrylat-Stearylmethacrylat-Polymerkügelchen, stabilisiert wie K-13, enthaltend 22,2 g Kügelchen pro 100 g Dispersion.

### Herstellung der Saat K-15 mit Kammstruktur

In einen doppelwandigen 10l Glaszylinder, ausgerüstet gemäß Reaktionsgefäß für K-14, wurden bei Raumtemperatur 159,16 g einer 19,1 gew.-%igen wäßrigen Lösung von Styrol-Maleinsäureanhydrid-Copolymer, eingestellt auf pH 7, 1355,2 g destilliertes Wasser und Zitronensäure zur Einstellung von pH 5 gegeben. Das Reaktionsgefäß wurde kontinuierlich mit Stickstoff gespült und von Luft freigehalten.

Die Mischung wurde mit 100 U/Min. gerührt, nach 5 Minuten auf 65°C erhitzt und nach 45 Minuten mit 6,0 g Kaliumpersulfat versetzt. Die Reaktionsmischung wurde weitere 120 Minuten gerührt und bei 65°C gehalten. Anschließend wurden 4699,2 g Methanol und danach eine vorgemischte Lösung von 1490,35 g Methylmethacrylat, 30,4 g Stearylmethacrylat und 30,44 g Nonylphenolpolyglykolether auf einmal hinzugefügt. Die Mischung wurde dann auf 65°C gehalten und änderte etwa nach 35 Minuten ihr klares Aussehen in eine milchig-weiße Dispersion. Die Polymerisation wurde dann bei 65°C 18 Stunden weitergeführt und anschließend auf 30°C unter Rühren abgekühlt. Schließlich wurde die Dispersion durch ein Nylontuch mit der Maschengröße 75 x 75 µm filtriert. Man erhielt 7670 g einer Dispersion von Methylmethacrylat-Stearylmemacrylat-Copolymerkügelchen, stabilisiert wie K-13, die 20,4 g Perlen pro 100 g Dispersion enthielt.

**Tabelle 2:**

| **Hergestellte Saaten mit Kammstruktur** | | | |
|---|---|---|---|
| **Saat** | Monomergemisch: Methymethacrylat mit | Teilchengöße [µm] | Monodispersistät [∅ (90)/∅ (10)] |
| **K-1** | 2 Gew.% Ethylmethacrylat | 4,57 | 1,18 |
| **K-2** | 25 Gew.% Ethylmethacrylat | 8,48 | 1,20 |
| **K-3** | 2 Gew.% n-Butylmethacrylat | 5,75 | 1,19 |
| **K-4** | 5 Gew.% n-Butylmethacrylat | 7,19 | 1,16 |
| **K-5** | 25 Gew.% n-Butylmethacrylat | 10,12 | 1,22 |
| **K-6** | 2 Gew.% Ethylhexylmethacrylat | 4,46 | 1,22 |
| **K-7** | 25 Gew.% Ethylhexylmethacrylat | 6,64 | 1,19 |
| **K-8** | 2 Gew.% Dodecylmethacrylat | 4,96 | 1,18 |
| **K-9** | 5 Gew.% Dodecylmethacrylat | 4,96 | 1,20 |
| **K-10** | 2 Gew.% Stearylmethacrylat | 6,04 | 1,20 |
| **K-11** | 5 Gew.% Stearylmethacrylat | 3,71 | 1,17 |
| **K-12** | 25 Gew.% Stearylmethacrylat | 2,51 | 1,49 |
| **K-13** | 2 Gew.-% Stearylmethacrylat | 5,38 | 1,16 |
| **K-14** | 2 Gew.-% Stearylmethacrylat | 7,22 | 1,19 |
| **K-15** | 2 Gew.-% Stearylmethacrylat | 3,06 | 1,13 |

### Erfindungsgemäße Saatzulauf-Polymerisate nach dem statischen Verfahren und Vergleichsbeispiele

Die Saaten 0-1 bis 0-6 und K-1 bis K-12 wurden in einem Saatzulauf-Verfahren nach der folgenden Standardvorschrift eingesetzt.

In einem 4 l-Reaktor, ausgerüstet mit einem Gitterrührer, wurden 2 000 g Wasser 500 g Saat-Dispersion (20,0 Gew.-%; Tabelle 3) und 32 g Sulfobernsteinsäure-Natriumsalz (75 gew.-%ig) gemischt. Unter Stickstoff bei einer Rührgeschwindigkeit von 150 U/min wurde eine Zulauf aus 400 g Methylmethacrylat und 5,33 g Dibenzoylperoxid (75 gew.-%ig) der Saat-Dispersion innerhalb 10 Minuten zugegeben. Nach einer Quellzeit von zwei Stunden wurde diese Mischung auf 80°C gebracht und weitere 12 Stunden bei 80°C und 150 U/min gerührt. Anschließend wurde die fertige Polymerdispersion auf Raumtemperatur abgekühlt und das Saatzulauf-Polymerisat durch Sedimentation isoliert. Die Teilchengrößen der erhaltenen Saatzulauf-Polymerisate und die Effizienz der Polymerisationen sind in Tabelle 3 eingetragen.

Unter dem Begriff Effizienz wird der Anteil des Zulaufs, der in die Saat hineinquillt und dort polymerisiert, bezogen auf die Gesamtmenge an zugesetztem Zulauf, verstanden. Der Anteil des Zulaufs, der in die Saat hineinquillt und dort polymerisiert, wird aus der Zunahme des Teilchendurchmessers errechnet.

### Erfindungsgemäße Saatzulauf-Polymerisate nach dem dynamischen Verfahren

### Beispiel 9

In einem 10l Reaktor, ausgerüstet mit einem Rührer, einem Thermometer, einem Stickstoffeinlaß und einem Rückflußkühler wurden 1500 g der Saat K-13 mit 90 g Nonylphenolpolyglykolether und 90 g des Mononatriumsalzes des Styrol-Maleinsäure-Copolymerisates gemischt. Unter Stickstoff wurde diese Reaktionsmischung unter Rühren mit 75 U/Min. auf 65°C erhitzt. Bei dieser Temperatur wurde eine vorher hergestellte Emulsion von 900 g Methylmethacrylat, 12 g Benzoylperoxid, 22,5 g Nonylphenolpolyglykolether, 22,5 g des Mononatriumsalzes des Styrol-Maleinsäure-Copolymerisates und 1861 g Wasser in 120 Minuten zugeführt. Anschließend wurde weitere 16 Stunden auf 65°C gehalten und schließlich filtriert. Nach der Filtration betrug die Konzentration 26,19 Gew.-%.

### Beispiel 10

Beispiel 9 wurde wiederholt, ausgenommen, daß der Zulauf in einen organischen Teil aus Methylmethacrylat und Benzoylperoxid und in einen wäßrigen Teil der übrigen Bestandteile getrennt wurde. Beide Mischungen wurden getrennt aber gleichzeitig in 120 Minuten hinzugegeben. Die Konzentration nach Filtration betrug 26,51 Gew.-%.

### Beispiel 11

Dieses Beispiel wurde wie Beispiel 10 durchgeführt, ausgenommen, daß der Initiator Benzoylperoxid zur Saat gegeben wurde, bevor alle anderen Bestandteile hinzugefügt wurden. Nach der Filtration betrug die Konzentration 26,9 Gew.-%.

### Beispiele 12 und 13

Die Verfahren entsprach Beispiel 11, ausgenommen, daß das Wasser, das Tensid, der Stabilisator und der Initiator der Saat vor dem Zulauf des Monomers zugefügt wurden. Der Zulauf bestand nur noch aus Methylmethacrylat, das in 20 Minuten hinzugegeben wurde. Nach dem Zulauf wurde die Temperatur auf 85°C erhöht. Nach der Filtration betrug die Konzentration 27,8 Gew.-%. Für Beispiel 12 wurde K-13, für Beispiel 13 K-14 als Saat verwendet.

### Beispiel 14 (dynamisches Saat-Zulaufverfahren zur Herstellung eines hochvernetzten kugelförmigen Polymerisates nach der Erfindung)

In einem 10l Reaktor mit einem Rührer, einem Thermometer, einem Stickstoffeinlaß und einem Rückflußkühler wurden 1500 g der Saat K-15 mit 90 g Nonylphenolpolyglykolether und 90 g des Mononatriumsalzes des Styrol-Maleinsäure-Copolymerisates gemischt. Unter Stickstoff wurde die Mischung mit 75 U/Min. gerührt und auf 65°C erhitzt. Bei dieser Temperatur wurden 2 g Benzoylperoxid zugegeben. Nach 2 Minuten wurden zwei Zuläufe gleichzeitig während 120 Minuten zugegeben: Zulauf 1 mit 440 g Methylmethacrylat, 360 g 3-Methacryloyloxypropyltrimethoxysilan und 12 g Benzoylperoxid; Zulauf 2 mit 22,5 g Nonylphenolpolyglykolether, 22,5 g Mononatriumsalz des Styrol-Maleinsäure-Coplymerisates und 3361 g Wasser.

Nach Beendigung der Zuläufe wurde die Mischung weitere 16 Stunden auf 85°C erhitzt. Die Konzentration nach Filtration betrug 17,31 Gew.-%.

**Tabelle 3:**

| **Hergestellte Saatzulauf-Polymerisate** | | | | |
|---|---|---|---|---|
| Beispiele | Verwendete Saat | Teilchengöße [µm] | Monodispersistät [∅ (90)/∅ (10)] | Effizienz [%] |
| Vergleich 1 | O-1 | 5,80 | 1,20 | 33,5 |
| Vergleich 2 | O-2 | 6,77 | 1,24 | 31,5 |
| Vergleich 3 | O-3 | 8,45 | 1,18 | 32,8 |
| Vergleich 4 | O-4 | 9,52 | 1,15 | 32,0 |
| Vergleich 5 | O-5 | 10,56 | 1,19 | 28,3 |
| Vergleich 6 | O-6 | 14,93 | 1,17 | 28,3 |
| Beispiel 1 | K-1 | 6,25 | 1,18 | 39,0 |
| Vergleich 7 | K-2 | 11,11 | 1,21 | 31,3 |
| Beispiel 2 | K-3 | 7,77 | 1,09 | 36,8 |
| Beispiel 3 | K-4 | 9,70 | 1,10 | 36,5 |
| Vergleich 8 | K-5 | 13,26 | 1,19 | 31,3 |
| Beispiel 4 | K-6 | 6,12 | 1,20 | 39,5 |
| Vergleich 9 | K-7 | 8,37 | 1,11 | 25,0 |
| Beispiel 5 | K-8 | 6,70 | 1,18 | 36,5 |
| Beispiel 4 | K-9 | 6,97 | 1,15 | 44,3 |
| Beispiel 7 | K-10 | 8,61 | 1,21 | 47,5 |
| Beispiel 8 | K-11 | 5,38 | 1,16 | 51,3 |
| Vergleich 10 | K-12 | 3,23 | 1,22 | 28,3 |
| Beispiel 9 | K-13 | 7,94 | 1,16 | 88 |
| Beispiel 10 | K-13 | 7,94 | 1,16 | 89,6 |
| Beispiel 11 | K-13 | 7,93 | 1,17 | 89,9 |
| Beispiel 12 | K-13 | 7,94 | 1,16 | 88,4 |
| Beispiel 13 | K-14 | 10,49 | 1,20 | 87,4 |
| Beispiel 14 | K-15 | 4,61 | 1,13 | 93 |

## Patentansprüche

1. Verfahren zur Herstellung von monodispersen kugelförmigen Polymerisaten mit einem gewichtsgemittelten mittleren Teilchendurchmesser von 1 bis 50 µm nach einem Saatzulauf-Verfahren umfassend die folgenden Schritte:
a) Suspendieren einer monodispersen kugelförmigen Saat in einer wäßrigen Phase,
b) Zugeben wenigstens eines Monomers und eines Initiators,
c) Polymerisieren des wenigstens einen Monomers,
**dadurch gekennzeichnet, daß** die Saat aus einem Polymer mit Kammstruktur besteht

2. Verfahren nach Anspruch 1, **dadurch gekennzeichnet, daß** das wenigstens eine Monomer der wäßrigen Suspension der Saatteilchen bei Raumtemperatur zugegeben wird und die entstehende Reaktionsmischung auf die Polymerisationstemperatur des wenigstens einen Monomers aufgeheizt wird.

3. Verfahren nach Anspruch 1, **dadurch gekennzeichnet, daß** die wäßrige Suspension der Saatteilchen auf Polymerisationstemperatur aufgeheizt und das wenigstens eine Monomer mit einer Geschwindigkeit von höchstens 1/30 g pro g Saatpolymer pro Minute zugegeben wird.

4. Verfahren zur Herstellung von monodispersen kugelförmigen Polymerisaten nach Anspruch 1, **dadurch gekennzeichnet, daß** die Saat eine mittlere Teilchengröße von 0,5 bis 15 µm besitzt und einen Quotienten aus dem 90%-Wert (∅ (90)) und dem 10%-Wert (∅ (10)) der Volumenverteilung von weniger als 2,0, bevorzugt weniger als 1,5, aufweist.

5. Verfahren nach Anspruch 1, **dadurch gekennzeichnet, daß** die monodisperse, kugelförmige Saat ein Copolymerisat aus
a) 99,5 bis 80 Gew.-% Methylmethacrylat und
b) 0,5 bis 20 Gew.-% mindestens eines (Meth)acrylsäurealkylesters mit einem C₂- bis C₂₂-Alkylrest ist.

6. Verfahren nach Anspruch 5, **dadurch gekennzeichnet, daß** der (Meth)acrylsäurealkylester ein C₂- bis C₂₂-Ester der Methacrylsäure ist.

7. Verfahren nach Anspruch 1, **dadurch gekennzeichnet, daß** in Anwesenheit eines Tensids polymerisiert wird.

8. Verfahren nach Anspruch 7, **dadurch gekennzeichnet, daß** das Tensid ein Salz der Sulfobernsteinsäure ist.

9. Verfahren nach Anspruch 1, **dadurch gekennzeichnet, daß** der Initiator in einer Menge von 0,05 bis 6,0 Gew.-%, bezogen auf den Zulauf, eingesetzt wird.

10. Verwendung der kugelförmigen Copolymerisate erhältlich mit dem Verfahren nach Anspruch 1 als Sintermaterial zur Herstellung von 3D-Modellen durch Sintern mittels Laser.

11. Verwendung der kugelförmigen Copolymerisate erhältlich mit dem Verfahren nach Anspruch 1 als Abstandshalter für Filmmaterialien.

12. Verwendung der kugelförmigen Copolymerisate erhältlich mit dem Verfahren nach Anspruch 1 als Abstandshalter in LCD-Schirmen.

13. Verwendung der kugelförmigen Copolymerisate erhältlich mit dem Verfahren nach Anspruch 1 als Abstandshalter in Bildempfangsmaterialien für anschlagfreie Druckverfahren.

## Revendications

1. Procédé pour la préparation de polymères monodispersés de forme sphérique possédant un diamètre moyen de particule, conformément à la moyenne en poids, de 1 à 50 µm conformément à un procédé d'addition à un germe, comprenant les étapes ci-après consistant à :
a) mettre un germe monodispersé de forme sphérique en suspension dans une phase aqueuse,
b) ajouter au moins un monomère et un initiateur,
c) polymériser le monomère au moins au nombre de 1,
**caractérisé en ce que** le germe est constitué d'un polymère possédant une structure en forme de peigne.

2. Procédé selon la revendication 1, **caractérisé en ce qu'**on ajoute le monomère, au moins au nombre de 1, à la suspension aqueuse des particules de germes à la température ambiante et on chauffe le mélange réactionnel obtenu à la température de polymérisation du monomère, au moins au nombre de 1.

3. Procédé selon la revendication 1, **caractérisé en ce qu'**on chauffe la suspension aqueuse des particules de germes à la température de polymérisation et on ajoute le monomère, au moins au nombre de 1, à une vitesse maximale de 1/30 g par gramme de polymère obtenu par ensemencement par minute.

4. Procédé pour la préparation de polymères monodispersés de forme sphérique selon la revendication 1, **caractérisé en ce que** le germe possède une granulométrie moyenne de 0,5 à 15 µm et un quotient de la valeur de 90 % (∅ (90)) et de la valeur de 10 % (∅ (10)) de la distribution volumique inférieur à 2,0, de préférence inférieur à 1,5.

5. Procédé selon la revendication 1, **caractérisé en ce que** le germe monodispersé de forme sphérique est un copolymère constitué
a) à concurrence de 99,5 à 80 % en poids, par du méthacrylate de méthyle, et
b) à concurrence de 0,5 à 20 % en poids, par au moins un ester alkylique d'acide (méth)acrylique comprenant un radical alkyle en C₂-C₂₂.

6. Procédé selon la revendication 5, **caractérisé en ce que** l'ester alkylique d'acide (méth)acrylique comprenant est un ester en C₂-C₂₂ de l'acide méthacrylique.

7. Procédé selon la revendication 1, **caractérisé en ce qu'**on effectue la polymérisation en présence d'un agent tensioactif.

8. Procédé selon la revendication 7, **caractérisé en ce que** l'agent tensioactif est un sel de l'acide sulfosuccinique.

9. Procédé selon la revendication 1, **caractérisé en ce que** l'initiateur est mis en oeuvre en une quantité de 0,05 à 6,0 % en poids, rapportés à l'addition.

10. Utilisation des copolymères de forme sphérique que l'on obtient avec le procédé selon la revendication 1 à titre de matière frittée pour la préparation de modèles en trois dimensions par frittage à l'aide d'un laser..

11. Utilisation des copolymères de forme sphérique que l'on obtient conformément au procédé selon la revendication 1, à titre d'agent d'espacement pour des matériaux en films.

12. Utilisation des copolymères de forme sphérique que l'on obtient conformément au procédé selon la revendication 1, à titre d'agent d'espacement dans des écrans LCD.

13. Utilisation des copolymères de forme sphérique que l'on obtient conformément au procédé selon la revendication 1, à titre d'agent d'espacement dans des matériaux de réception d'image pour des procédés d'impression sans contact.

## Claims

1. Process for the production of monodisperse spherical polymers having a weight-averaged average particle diameter of 1 to 50 µm using a seed/feed process comprising the following steps :
a) suspension of a monodisperse spherical seed in an aqueous phase,
b) addition of at least one monomer and an initiator,
c) polymerisation of the at least one monomer,
**characterised in that** the seed consists of a polymer having a comb structure.

2. Process according to claim 1, **characterised in that** the at least one monomer is added to the aqueous suspension of the seed particles at room temperature and the resultant reaction mixture is heated to the polymerisation temperature of the at least one monomer.

3. Process according to claim 1, **characterised in that** the aqueous suspension of the seed particles is heated to polymerisation temperature and the at least one monomer is added at a rate of at most 1/30 g per g of seed polymer per minute.

4. Process for the production of monodisperse spherical polymers according to claim 1, **characterised in that** the seed has an average particle size of 0.5 to 15 µm and a quotient of the 90^{th} centile value (∅(90)) and the 10^{th} centile value (∅(10)) of the volume distribution of less than 2.0, preferably of less than 1.5.

5. Process according to claim 1, **characterised in that** the monodisperse spherical seed is a copolymer of
a) 99.5 to 80 wt. % of methyl methacrylate,
b) 0.5 to 20 wt. % of at least one (meth)acrylic acid alkyl ester having a C₂ to C₂₂ alkyl residue.

6. Process according to claim 5, **characterised in that** the (meth)acrylic acid alkyl ester is a C₂ to C₂₂ ester of methacrylic acid.

7. Process according to claim 1, **characterised in that** polymerisation is performed in the presence of a surfactant.

8. Process according to claim 7, **characterised in that** the surfactant is a salt of sulfosuccinic acid.

9. Process according to claim 1, **characterised in that** the initiator is used in a quantity of 0.05 to 6.0 wt.%, relative to the feed.

10. Use of the spherical copolymers producible by the process according to claim 1 as sintering material for the production of 3D models by laser sintering.

11. Use of the spherical copolymers producible by the process according to claim 1 as spacers for film materials.

12. Use of the spherical copolymers producible by the process according to claim 1 as spacers in LCD screens.

13. Use of the spherical copolymers producible by the process according to claim 1 as spacers in image receiving materials for non-impact printing processes.
